# FASCICULE DE BREVET EUROPEEN

(11) **EP 3 562 703 B1**
(45) Date de publication et mention de la délivrance du brevet: **01.11.2023**
(21) Numéro de dépôt: 17828949.2
(22) Date de dépôt: 18.12.2017
(51) Int. Cl.: B60L 58/22

(54) **SYSTÈME DE TRANSPORT À ÉNERGIE ÉLECTRIQUE**
ELEKTRISCH ANGETRIEBENES TRANSPORTSYSTEM
ELECTRICALLY POWERED TRANSPORT SYSTEM

(30) Priorité: 28.12.2016 FR 1663444
(43) Date de publication de la demande: 06.11.2019
(73) Titulaire: Commissariat à l'Energie Atomique et aux Energies Alternatives, 75015 Paris (FR); Metalliance, 71230 Saint Vallier (FR)
(72) Inventeur: LOPEZ, Yan, 38140 Renage (FR)
(74) Mandataire: INNOV-GROUP
(86) Numéro de dépôt international: PCT/FR2017/053629
(87) Numéro de publication internationale: WO 2018/122491

(56) Documents cités:
- US-A1- 2008 174 174
- US-A1- 2015 204 741

## Description

### Domaine technique de l'invention

La présente invention se rapporte à un système de transport à énergie électrique et à un procédé de gestion d'énergie électrique dans un tel système de transport à énergie électrique.

### Etat de la technique

On distingue aujourd'hui différentes solutions d'entraînement d'un système de transport. Une première solution classique consiste à employer des moteurs thermiques, à énergie fossile ou gazeuse. Une deuxième solution apparue plus récemment consiste à employer un système hybride dans lequel un moteur thermique est associé à un moteur électrique, un dispositif permettant de gérer le passage de l'un à l'autre. Enfin, une troisième solution consiste à employer un système entièrement électrique, comportant un ou plusieurs moteurs électriques alimentés par des batteries.

Il s'avère que les solutions d'entraînement qui utilisent uniquement des moteurs électriques alimentés par batteries présentent des avantages dans certaines applications. C'est le cas notamment dans les systèmes de transport à plusieurs véhicules, appelés train de véhicules et employés pour le transport de charge dans la construction d'infrastructures. C'est le cas par exemple des infrastructures telles que des tunnels dont la formation s'allonge au fur et à mesure de l'avancement des travaux. Pour de telles infrastructures, il est en effet important de disposer d'une solution parfaitement autonome en énergie et qui n'engendre pas de pollution directe comme les solutions thermiques ou hybrides. La demande de brevet FR3024703A1 décrit une telle solution de système de transport à énergie électrique.

Cette demande de brevet décrit notamment un système de transport qui se compose d'un train de plusieurs véhicules accrochés les uns aux autres et incluant un véhicule de tête et un véhicule de queue dotés chacun d'une cabine de conduite pour pouvoir déplacer le système dans les deux sens, sans avoir à faire un demi-tour. Chaque véhicule est entraîné par son propre ensemble d'entraînement électrique. Chaque ensemble d'entraînement électrique comporte au moins un moteur électrique destiné à entraîner des roues du véhicule, un convertisseur pour contrôler le moteur électrique et un module de stockage d'énergie électrique permettant d'alimenter le moteur en énergie électrique.

La solution décrite dans ce document prévoit notamment des moyens de transfert d'énergie électrique entre les modules de stockage d'énergie électrique du système de transport. Ces moyens permettent par exemple de transférer directement une énergie électrique d'un module de stockage d'énergie électrique vers un autre module de stockage d'énergie électrique, afin d'équilibrer l'état de charge entre les deux modules. Il s'agit par exemple de piloter la décharge d'un module de stockage d'énergie électrique ayant un état de charge supérieur 70% vers un module de stockage d'énergie électrique ayant un état de charge inférieur à 30%. Pour réaliser un tel transfert d'énergie électrique, la solution nécessite donc :
- De connecter les modules entre eux par des liaisons de puissance ;
- D'employer des convertisseurs et des moyens de pilotage des convertisseurs pour assurer le transfert de puissance entre les modules ;

On comprend ainsi que lorsqu'il s'agit de dupliquer une telle solution entre tous les modules, cela peut s'avérer complexe à mettre en oeuvre, encombrant et coûteux.

Le document US2015/0204741A1 décrit un système comprenant un véhicule auquel est attachée une remorque. La solution proposée permet de simuler le comportement de fonctionnement d'un véhicule auquel est attachée une remorque. La simulation s'adresse particulièrement à un véhicule doté d'une batterie de traction. Le véhicule comporte une batterie de traction permettant d'alimenter son moteur électrique. La remorque comporte également une batterie de traction ainsi qu'un moteur électrique. La batterie de la remorque est capable d'alimenter le moteur du véhicule ainsi que de recharger la batterie du véhicule. Le moteur électrique de la remorque peut fonctionner en mode freinage. L'énergie électrique générée lors du freinage peut être utilisée pour charger la batterie du véhicule ou la batterie de la remorque. Elle peut également être dissipée dans un système de dissipation.

Dans cette solution, les deux batteries présentent entre elles une liaison de puissance, un transfert d'énergie pouvant être effectué de l'une à l'autre. Ce principe de transfert d'énergie ne permet pas d'obtenir une solution modulaire dans laquelle les deux systèmes d'entraînements côté remorque et côté véhicule sont indépendants.

Un premier but de l'invention est donc de proposer une solution qui permette de réaliser, dans un système de transport à énergie électrique, un transfert d'énergie électrique d'un module de stockage d'énergie électrique à un autre module de stockage d'énergie électrique, sans avoir recours à une liaison de puissance entre les modules, ni à des moyens de transfert d'énergie tels que décrits dans l'état de la technique.

### Exposé de l'invention

Ce premier but est atteint par un système de transport à énergie électrique comportant :
- Plusieurs ensembles de roulement accrochés entre eux par une liaison mécanique ;
- Plusieurs ensembles d'entraînement électrique, associés chacun à un ensemble de roulement distinct, chaque ensemble d'entraînement électrique comprenant :
   o Au moins un moteur électrique pour entraîner ledit ensemble de roulement au sol en rotation ;
   o Au moins un module de stockage d'énergie électrique destiné à alimenter ledit moteur électrique en énergie électrique et comportant plusieurs cellules de stockage d'énergie électrique ;
   o Au moins un convertisseur de tension bidirectionnel agencé pour contrôler un transfert d'énergie électrique entre ledit module de stockage d'énergie électrique et ledit moteur électrique dans un mode moteur ou un transfert d'énergie du moteur électrique vers le module de stockage d'énergie électrique dans un mode générateur ;
- Le module de stockage d'énergie électrique de chaque ensemble d'entraînement électrique ne présentant aucune liaison électrique de puissance avec le module de stockage d'énergie électrique de chaque autre ensemble d'entraînement électrique ;
- Des moyens de traitement et de gestion agencés pour gérer chaque module de stockage d'énergie électrique et pour commander chaque convertisseur desdits ensembles d'entraînement électrique ;
- Les moyens de traitement et de gestion comportant :
   o Des moyens de détermination d'une demande en exécution d'au moins une fonction de gestion au sein de chaque module de stockage d'énergie électrique ;
   o Des moyens de détermination d'une séquence à appliquer au module de stockage d'énergie électrique selon ladite fonction de gestion déterminée pour ce module, et en ce que
   o Pour un premier module d'un premier ensemble d'entraînement électrique du système, ladite séquence comporte au moins une phase de charge par injection d'un courant de charge dans les cellules de ce premier module de stockage d'énergie électrique, généré par un freinage du premier ensemble d'entraînement électrique et au moins une phase de maintien d'une vitesse de consigne non nulle du système de transport pendant ledit freinage, appliquée au moins en partie à un deuxième ensemble d'entraînement électrique du système.
- Ladite séquence pour le premier module de stockage d'énergie électrique du premier ensemble d'entraînement électrique consiste en une séquence d'équilibrage en tension des cellules du module de stockage d'énergie électrique.

Par rapport à la solution de l'état de la technique, la solution de l'invention permet de supprimer toute liaison de puissance entre deux modules de manière à éviter l'emploi d'un convertisseur pour réaliser un transfert d'énergie de l'un à l'autre. Par ailleurs, l'absence de liaison de puissance permet d'augmenter la modularité du système, chaque module pouvant être facilement remplacé.

Selon une particularité de l'invention, les moyens de traitement et de gestion comportent une unité centrale et plusieurs unités de gestion d'énergie électrique associés chacune à un module de stockage d'énergie électrique distinct desdits au moins deux ensembles d'entraînement électrique.

Selon une autre particularité de l'invention, le système comporte au moins deux liaisons de communication reliant l'unité centrale à chaque ensemble d'entraînement.

La solution de l'invention permettra notamment d'assurer un transfert d'énergie d'un module de stockage d'énergie électrique vers un autre module de stockage d'énergie électrique pour permettre de charger le module jusqu'à un état de charge déterminé permettant la mise en place de fonctions de gestion du module. L'une des fonctions de gestion du module concerne notamment l'équilibrage en tension des cellules du module de stockage d'énergie électrique. En effet, il faut noter que même si les solutions entièrement électriques présentent certains avantages, elles nécessitent une gestion appropriée des modules de stockage d'énergie électrique employés. En effet, un module de stockage d'énergie électrique comporte couramment plusieurs cellules élémentaires de stockage d'énergie électrique associés en série et/ou parallèle, pour constituer la tension et/ou la capacité totale d'alimentation. Au fil du temps et des utilisations, et à cause des imperfections de ces cellules élémentaires, des différences d'état de charge se créent entre les cellules d'un même module de stockage d'énergie électrique. Si rien n'est fait pour équilibrer les états de charge des cellules d'un module, l'énergie électrique stockée dans le module ne peut pas être exploitée dans sa totalité. En effet, la tension d'une cellule va limiter la charge tandis que la tension d'une autre cellule va limiter la décharge. Ou, autrement dit, la charge du module est stoppée dès qu'au moins une cellule est complètement chargée et le module est déchargé dès qu'au moins une cellule est complètement déchargée. Les déséquilibres en tension entre cellules limitent donc l'utilisation de la batterie. Il est donc nécessaire de procéder à un équilibrage en tension régulier des cellules élémentaires d'un module de manière à conserver des performances optimales. Différentes solutions ont été proposées pour réaliser un équilibrage en tension des cellules d'un module. Une solution dite passive consiste à employer des résistances de dissipation pour décharger de manière ciblée les cellules trop chargées. Une autre solution dite active, consiste à charger les cellules de manière ciblée jusqu'à équilibrage.

Dans tous les cas, la séquence d'équilibrage n'est pas toujours réalisable pendant que le système de transport est en fonctionnement. Pour certaines technologies de batterie, comme les batteries de type Lithium-Fer-Phosphate (LiFePO4), la séquence d'équilibrage doit se faire lorsque le système de transport est à l'arrêt et en fin de charge du module. Or cette séquence d'équilibrage est réalisée à faible courant et s'avère particulièrement lente, augmentant donc la durée totale de charge d'un module. L'une des solutions serait de retirer les modules à charger du système et de les remplacer par des modules déjà chargés mais cette opération s'avère longue et difficilement réalisables, les modules étant particulièrement lourds et encombrants. La solution consiste donc à charger les modules alors que ceux-ci sont toujours sur le système de transport. En maintenant les modules de stockage sur le système de transport lors de leur charge, on s'affranchit donc d'une étape de remplacement des modules à charger mais on réduit la durée de disponibilité du système, celui-ci devant être à l'arrêt, au moins lors de la séquence d'équilibrage des cellules de ses modules.

Un autre but de l'invention est donc de proposer une solution pour réaliser, grâce au principe de transfert d'énergie décrit ci-dessus, un équilibrage en tension des cellules d'un module de stockage d'énergie électrique employé dans un système de transport, sans trop affecter la durée de disponibilité du système de transport.

Cet autre but de l'invention est atteint par le système tel que défini ci-dessus dans lequel ladite séquence consiste en la séquence d'équilibrage en tension des cellules du module de stockage d'énergie électrique.

Selon une particularité, la séquence d'équilibrage comporte plusieurs phases de charge successives, entraînant plusieurs injections de courant de charge successives dans le module de stockage d'énergie électrique dont les cellules sont à équilibrer, séparées entre elles par des phases d'équilibrage.

En outre, selon un autre aspect de l'invention, chaque ensemble d'entraînement comporte :
- Deux moteurs électriques ;
   Deux convertisseurs destinés chacun à commander un moteur électrique distinct ;
- Un module de stockage d'énergie électrique ;

Selon une autre particularité, chaque ensemble de roulement comporte deux roues, actionnées chacune par un moteur distinct de l'ensemble d'entraînement.

Selon une autre particularité, chaque ensemble d'entraînement comporte un chargeur intégré au module de stockage d'énergie électrique.

Selon une autre particularité, le module de stockage d'énergie électrique de chaque ensemble d'entraînement comporte une sortie auxiliaire agencée pour alimenter au moins un auxiliaire de puissance.

Selon une autre particularité, cette sortie auxiliaire est protégée par deux diodes.

Selon une autre particularité, chaque ensemble d'entraînement comporte une unité de gestion de l'énergie électrique stockée dans le module de stockage d'énergie électrique.

L'invention concerne également un procédé de gestion d'énergie électrique dans un système de transport conforme à celui défini ci-dessus, ledit procédé comportant les étapes suivantes :
- Déterminer une demande en exécution d'au moins une fonction de gestion au sein du premier module de stockage d'énergie électrique du premier ensemble d'énergie électrique ;
- Déterminer une séquence à appliquer au premier module de stockage d'énergie électrique du premier ensemble d'entraînement électrique selon ladite fonction de gestion déterminée, ladite séquence comprenant au moins une phase de charge par injection d'un courant de charge dans les cellules du premier module de stockage d'énergie électrique du premier ensemble d'ensemble d'entraînement électrique, généré par un freinage du premier ensemble d'entraînement électrique et au moins une phase de maintien d'une vitesse de consigne non nulle du système de transport pendant ledit freinage appliquée au moins en partie audit deuxième ensemble d'entraînement électrique, ladite séquence consistant en une séquence d'équilibrage en tension des cellules du premier module de stockage d'énergie électrique du premier ensemble d'entraînement électrique.

Selon une autre particularité, la séquence d'équilibrage comporte plusieurs phases de charge successives, entraînant plusieurs injections de courant de charge successives dans le module de stockage d'énergie électrique dont les cellules sont à équilibrer, séparées entre elles par des phases d'équilibrage.

### Brève description des figures

D'autres caractéristiques et avantages vont apparaître dans la description détaillée qui suit faite en regard des dessins annexés dans lesquels :
- La figure 1 représente, de manière schématique, un système de transport conforme à l'invention ;
- La figure 2 représente, de manière schématique, un véhicule employé dans un système de transport conforme à l'invention ;
- La figure 3 représente, de manière schématique, un ensemble d'entraînement employé dans le système de transport de l'invention ;
- La figure 4 représente, de manière schématique, une variante de réalisation de l'ensemble d'entraînement représenté en figure 3 ;
- La figure 5 représente le circuit d'alimentation d'un auxiliaire, réalisé à l'aide des modules de stockage employés dans les ensembles d'entraînement tels que représentés sur la figure 4 ;
- La figure 6 représente, de manière schématique, un principe de fonctionnement du système de transport de l'invention ;
- Les figures 7A et 7B représentent plusieurs courbes illustrant le principe de fonctionnement présenté sur la figure 6 ;
- La figure 8 représente un algorithme exécuté pour la mise en oeuvre du principe de fonctionnement présenté sur la figure 6 ;

### Description détaillée d'au moins un mode de réalisation

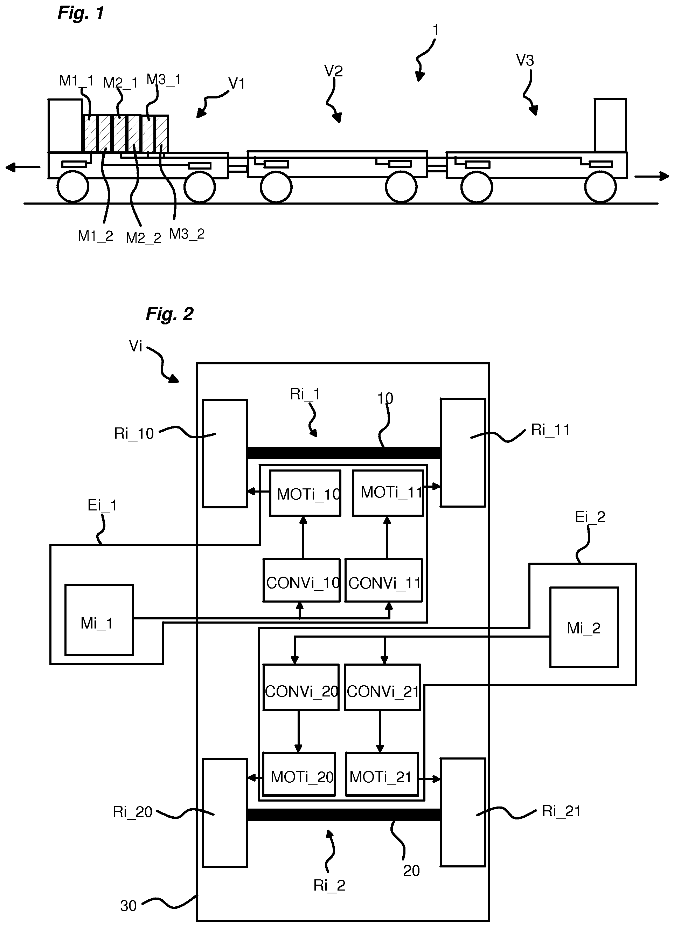

L'invention concerne un système de transport à énergie électrique, c'est-à-dire tracté entièrement par une énergie électrique fournie par des batteries. L'invention s'applique plus particulièrement à un système de transport 1 de type train de véhicules, employé notamment pour transporter des charges lors de la construction d'infrastructures, telles que par exemple des tunnels. Un tel système 1 est représenté sur la figure 1.

Ci-dessous, de manière générale, pour les différents éléments du système on utilisera les références suivantes :
- Ei_X pour les ensembles d'entraînement ;
- Mi_X pour les modules de stockage d'énergie électrique,
- U_Mi_X pour les unités de gestion d'énergie électrique de chaque module de stockage d'énergie électrique ;
- MOTi_Y pour les moteurs électriques ;
- CONVi_Y pour les convertisseurs ;
- Ri_X pour les ensembles de roulement ;
- Ri_Y pour les roues ;

Avec X=1 ou 2 et Y=10 ou 11 ou 20 ou 21.

Ce type de système 1 comporte des moyens de roulement, tels que des roues coopérant avec des rails ou avec le sol directement.

On considère que le système comporte un nombre n de véhicules Vi, avec i allant de 1 à n et n supérieur ou égal à 1. Les véhicules sont accrochés entre eux par une liaison mécanique.

Le système est par exemple de type bicabine, c'est-à-dire qu'il comporte une première cabine de conduite dans le véhicule de tête (V1 sur la figure 1) et une deuxième cabine de conduite dans le véhicule de queue (V3 sur la figure 1). Cette solution permet au système d'aller dans un sens ou dans l'autre, sans faire demi-tour, ceci étant avantageux lors de la construction d'une infrastructure telle qu'un tunnel.

Pour la suite de la description, en référence à la figure 2, on considère que chaque véhicule Vi du système comporte un châssis 30 et au moins deux ensembles de roulement Ri_1, Ri_2, permettant de faire rouler le véhicule. Chaque ensemble de roulement Ri_1, Ri_2 comporte avantageusement deux roues (référencées Ri_10, Ri_11 pour le premier ensemble de roulement et Ri_20, Ri_21 pour le deuxième ensemble de roulement) reliées entre elles par un essieu 10, 20. Le système comporte ainsi 2n ensembles de roulement Ri_1, Ri_2, avec i allant de 1 à n et n supérieur ou égal à 1. Chaque essieu peut présenter une fonction directionnelle permettant au véhicule Vi de s'orienter de manière adaptée sur son parcours.

Selon un aspect de l'invention, dans chaque véhicule Vi, chaque ensemble de roulement Ri_1, Ri_2 est entraîné en rotation par un ensemble d'entraînement Ei_1, Ei_2 électrique distinct. Le système comporte ainsi 2n ensembles d'entraînement, n étant supérieur ou égal à 1.

Selon l'invention, chaque ensemble d'entraînement comporte :
- Au moins un moteur électrique chargé d'entraîner l'ensemble de roulement en rotation ;
- Au moins un convertisseur de tension pour commander chaque moteur électrique ;
- Un module de stockage d'énergie électrique.

De manière avantageuse, en référence aux figures 2 à 4, chaque ensemble d'entraînement comportera :
- Deux moteurs électriques (MOTi_10, MOTi_11 pour l'ensemble d'entraînement Ei_1 et MOTi_20, MOTi_21 pour l'ensemble d'entraînement Ei_2), un moteur électrique distinct étant associé à chaque roue de l'ensemble de roulement ;
- Deux convertisseurs distincts (CONVi_10, CONVi_11 et CONVi_20, CONVi_21), destinés chacun à la commande d'un moteur distinct de l'ensemble d'entraînement ;
- Un module de stockage d'énergie électrique Mi_1, Mi_2 pour l'alimentation électrique des deux moteurs électriques de l'ensemble ;

Les ensembles d'entrainement sont avantageusement tous identiques.

Les moteurs d'un même ensemble d'entraînement sont avantageusement tous identiques.

Les convertisseurs d'un même ensemble d'entraînement sont avantageusement tous identiques.

Les modules de stockage d'énergie électrique d'un même ensemble d'entraînement sont avantageusement tous identiques.

De manière classique, les modules de stockage d'énergie électrique du système sont rechargés en employant une borne de recharge. La borne de recharge pourra notamment comporter des moyens pour gérer la charge des modules de stockage d'énergie électrique du système.

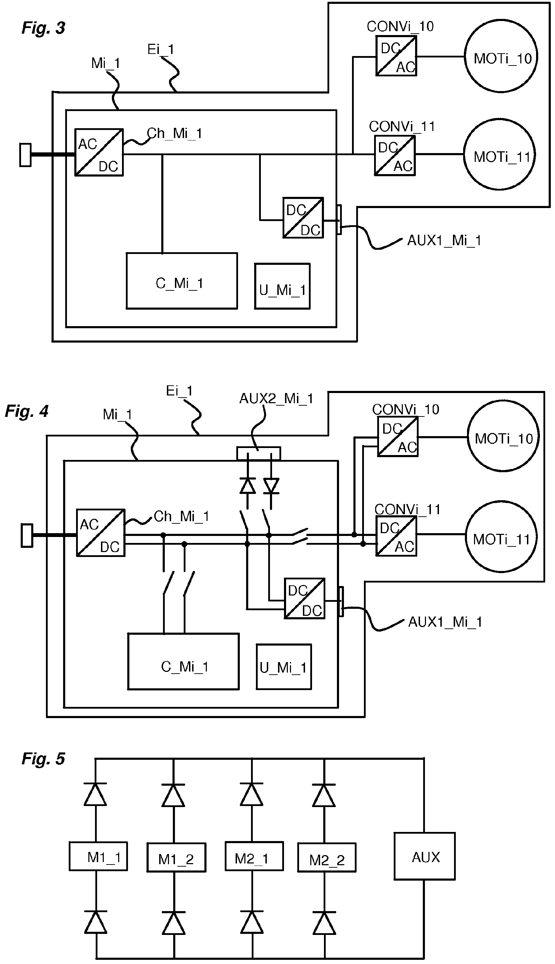

Les figures 3 et 4 représentent de manière détaillée un ensemble d'entraînement Ei_1 d'un véhicule Vi selon deux variantes de réalisation distinctes. Ces particularités s'appliquent avantageusement à tout ensemble d'entraînement du système.

Selon l'invention, dans l'ensemble d'entraînement Ei_1, chaque convertisseur CONVi_10, CONVi_11 de tension est de type bidirectionnel, c'est-à-dire réversible en courant, permettant ainsi de fonctionner :
- Selon un mode moteur, dans lequel il contrôle un transfert d'énergie électrique du module de stockage d'énergie électrique vers son moteur pour l'alimenter, ou
- Selon un mode générateur, dans lequel il contrôle un transfert d'énergie électrique de son moteur électrique vers le module de stockage d'énergie électrique. Ce mode générateur est mis en oeuvre lors d'un freinage du moteur électrique.

De manière connue, un tel convertisseur comportera par exemple :
- Un étage de sortie (convertisseur DC/AC) comprenant plusieurs bras de commutation commandés par une unité de commande ;
- Plusieurs phases de sortie reliées au moteur électrique et sur lesquelles sont appliquées les tensions de sortie de commande du moteur électrique ;

Dans l'ensemble d'entraînement Ei_1, chaque convertisseur CONVi_10, CONVi_11 sera avantageusement positionné au plus près du moteur qu'il commande, pour limiter au maximum les longueurs de câble et réduire les perturbations.

De manière connue, l'unité de commande du convertisseur met en oeuvre au moins une boucle de contrôle du convertisseur pour commander les transferts d'énergie du module de stockage d'énergie électrique vers le moteur électrique pour le faire tourner à une vitesse de consigne ou du moteur électrique vers le module de stockage d'énergie électrique pour entraîner la charge du module de stockage d'énergie électrique.

De manière connue, lors du freinage du moteur électrique, si l'ensemble de roulement entraîne le moteur électrique, l'énergie électrique générée par cet entraînement peut être récupérée et transférée dans le module de stockage d'énergie électrique.

Dans un même ensemble d'entraînement, en mode moteur, les deux convertisseurs sont avantageusement commandés avec la même consigne de manière à ce que les deux moteurs tournent à la même vitesse.

Selon un aspect de l'invention, on considérera qu'un module Mi_1 de stockage d'énergie électrique comporte plusieurs cellules C_Mi_1 élémentaires de stockage d'énergie électrique. Les cellules C_Mi_1 élémentaires peuvent être regroupées en plusieurs groupes de cellules connectés en série, les cellules d'un même groupe étant connectées entre elles en série et/ou parallèle. Dans la suite de la description, on parlera simplement de cellules pour exprimer à la fois une cellule ou un groupe de cellules. Chaque module de stockage d'énergie se présente par exemple sous la forme d'un boîtier indépendant enfermant les cellules de stockage d'énergie électrique. Chaque module Mi_1 est préférentiellement transportable et amovible du système pour être aisément remplacé.

De manière non limitative, dans chaque module, les cellules de stockage seront par exemple de type LiFePO4. Chaque cellule de ce type aura par exemple une tension pouvant aller de 2.5V à 3.5V, avec une tension nominale de 3.2V. Elles peuvent avoir une capacité allant de 1Ah à 200Ah selon les fabricants. Un module de stockage comporte par exemple plusieurs paquets de cellules mis en série permettant d'obtenir une tension nominale de fonctionnement élevée.

En référence aux figures 3 et 4, l'ensemble d'entraînement Ei_1 comporte avantageusement son propre chargeur Ch_Mi_1 agencé pour convertir la tension alternative fournie par une source d'alimentation électrique en une tension continue. Un tel chargeur Ch_Mi_1 est avantageusement intégré au module Mi_1 de stockage d'énergie électrique et comporte un convertisseur de type AC/DC. Celui-ci est utilisé pour assurer la recharge en énergie électrique des cellules de chaque module de stockage d'énergie électrique.

Le module Mi_1 comporte un bus continu d'alimentation sur lequel est connecté à la fois chaque convertisseur CONVi_10, CONVi_11 de l'ensemble d'entraînement et les cellules C_Mi_1 de stockage d'énergie électrique du module. Un condensateur de bus est par exemple employé pour stabiliser la tension du bus continu du module.

Le module comportera avantageusement des dispositifs de décharge actifs ou passifs de ses cellules de stockage d'énergie électrique. Une solution passive consistera par exemple à employer des résistances de décharge permettant une décharge des cellules du module par dissipation électrique.

L'ensemble d'entraînement Ei_1 comporte avantageusement des moyens de gestion de l'énergie électrique stockée dans les cellules de son module.

Ces moyens de gestion de l'énergie électrique comportent par exemple des capteurs de tension associés à chaque cellule du module et destinés à mesurer la tension aux bornes de chaque cellule du module. Ils comportent également des moyens d'acquisition des données de tension mesurée, des moyens de détermination de l'état de charge (SOC pour "State Of Charge") de chaque cellule du module, des moyens de détermination de l'état de santé du module (SOH pour "State Of Health"). Ils comportent avantageusement des moyens de détermination de demandes d'exécution d'une ou plusieurs fonctions de gestion du module. Les moyens d'acquisition, les moyens de détermination de l'état de charge et les moyens de détermination des demandes d'exécution des fonctions de gestion sont par exemple regroupés dans une même unité U_Mi_1 de gestion de l'énergie électrique (par exemple de type BMS pour "Battery Management System"), se présentant par exemple sous la forme d'un microcontrôleur distinct associé à la gestion de chaque module de stockage d'énergie électrique. Cette unité de gestion est par exemple logée dans le même boîtier que les cellules du module.

De manière non limitative, en référence à la figure 4, le module Mi_1 de stockage d'énergie électrique peut comporter une sortie AUX2_Mi_1 spécifique, à deux bornes, destinée à l'alimentation d'auxiliaires de puissance, par exemple des outils spécifiques (par exemple une toupie béton). Cette sortie auxiliaire spécifique est avantageusement protégée par deux diodes permettant d'empêcher tout transfert de courant d'un module de stockage à un autre lorsqu'au moins deux modules sont connectés en parallèle et deux contacteurs permettant de commander la fourniture d'énergie électrique du module vers les auxiliaires de puissance.

La figure 5 illustre l'architecture de connexion électrique entre un consommateur auxiliaire AUX et plusieurs modules de stockage (par exemple M1_1, M1_2, M2_1, M2_2) connectés en parallèle. Par cette figure, on comprend l'intérêt de la présence des diodes évoquées ci-dessus. L'auxiliaire AUX est connecté en parallèle sur la sortie spécifique de chaque module de stockage d'énergie électrique. De manière naturelle, c'est le module dont la tension est la plus élevée (c'est-à-dire le moins déchargé) qui fournit la puissance à l'auxiliaire connecté.

Les diodes sont positionnées de manière à éviter tout courant de retour vers les modules, c'est-à-dire tout courant de régénération en provenance de l'auxiliaire, et tout échange de courant d'un module à l'autre.

Dans le module Mi_1, plusieurs contacteurs sont par exemple positionnés de manière adaptée pour sélectionner la sortie du module, entre la sortie principale reliée aux moteurs de l'ensemble d'entraînement et la sortie auxiliaire évoquée ci-dessus. Ces contacteurs sont par exemple commandés par l'unité de gestion d'énergie électrique du module.

Sur les figures 3 et 4, on peut voir que chaque module intègre avantageusement une autre sortie auxiliaire AUX1_Mi_1 en basse tension (par exemple 24 V) par l'intermédiaire d'un convertisseur DC/DC connecté sur le bus continu d'alimentation du module.

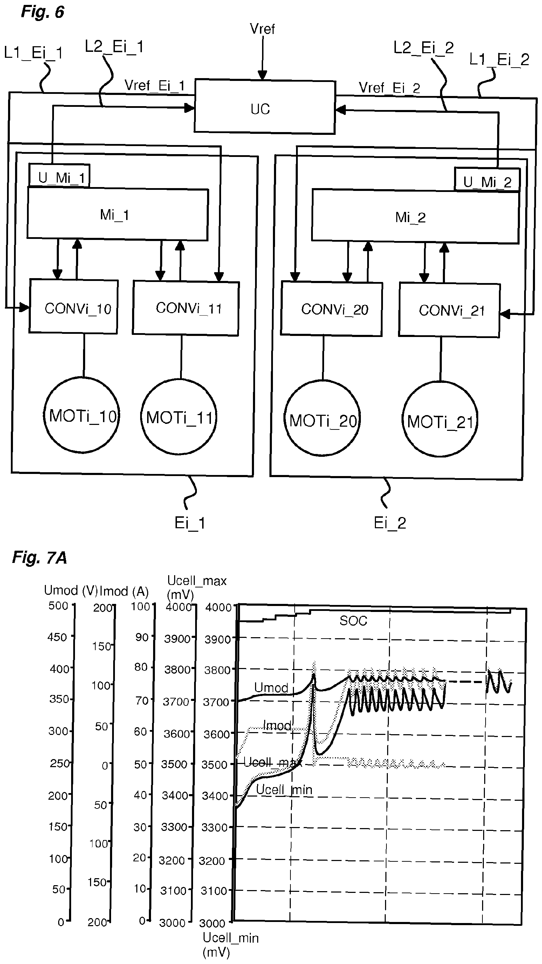

En référence à la figure 6, le système 1 comporte en outre une unité centrale UC de commande destinée à commander les 2n ensembles d'entraînement électrique du système de transport 1. Sur la figure 6, sont représentées les relations fonctionnelles entre l'unité centrale et deux ensembles d'entraînement quelconques du système de transport. De manière non limitative, la figure 6 représente ainsi les deux ensembles d'entraînement Ei_1 et Ei_2 mais il faut comprendre que l'architecture s'applique à tous les ensembles du système. L'unité centrale UC se présente par exemple sous la forme d'un microcontrôleur comportant plusieurs entrées et plusieurs sorties.

Chaque ensemble d'entraînement électrique Ei_1 (Ei_2) est relié à des entrées ou sorties de l'unité centrale UC par différentes liaisons de communication :
- Une première liaison de communication L1_Ei_1 (L1_Ei_2) entre l'unité centrale UC et les unités de commande des convertisseurs de l'ensemble d'entraînement électrique. Par cette première liaison, l'unité centrale UC émet une commande en vitesse (Vref_Ei_1, Vref_Ei_2) à destination de chaque unité de commande pour contrôler le convertisseur et donc le moteur électrique de l'ensemble d'entraînement ;
- Une deuxième liaison de communication L2_Ei_1, (L2_Ei_2) entre l'unité centrale UC et l'unité de gestion de l'énergie électrique U_Mi_1, (U_Mi_2) du module de stockage d'énergie électrique de l'ensemble d'entraînement. A travers cette deuxième liaison de communication, l'unité centrale UC peut notamment recevoir de la part de l'unité de gestion d'énergie électrique une demande de charge en cours de fonctionnement du système pour mettre en oeuvre une fonction de gestion déterminée du module de stockage d'énergie électrique.

Selon une particularité de l'invention, les modules Mi_X de stockage d'énergie électrique employés pour alimenter en énergie électrique les moteurs du système de transport ne présentent aucune liaison électrique de puissance entre eux, ni moyens de transfert de puissance (type convertisseur, contacteurs...) permettant un transfert de puissance direct d'un module vers un autre module par une liaison électrique de puissance. Ils sont donc dédiés chacun à l'entraînement d'un ou des deux moteurs électriques de leur ensemble d'entraînement électrique et ne partagent pas de bus DC commun.

L'un des principes de l'invention consiste à assurer la mise en oeuvre de l'équilibrage en tension des cellules au sein de chaque module Mi_X de stockage d'énergie électrique alors que le système de transport 1 est en fonctionnement, c'est-à-dire en cours de roulage. De manière non limitative, ees d'autres fonctions de gestion sont par exemple les suivantes :
- Atteinte d'un état de charge déterminé du module Mi_X de stockage d'énergie électrique, par exemple pour alimentation d'un auxiliaire ;
- Atteinte d'un état de charge déterminé pour une phase de test ou pour se positionner dans une zone pertinente de la courbe de décharge du module ;

Dans ce dernier cas, il s'agira par exemple d'atteindre un état de charge déterminé correspondant à une zone pertinente de la courbe de décharge (courbe de tension en fonction de l'état de charge) du module Mi_X de stockage d'énergie électrique. Selon la technologie employée pour réaliser les cellules d'un module, la courbe de décharge du module pourra varier. Certaines courbes de décharge présentent en effet des plateaux de tension au niveau desquels il est difficile de discriminer l'état de charge des différentes cellules de stockage du module. Il peut donc s'avérer pertinent de se positionner dans une zone pertinente de la courbe pour mieux gérer l'état des différentes cellules.

De manière non limitative, chaque fonction de gestion pourra être mise en oeuvre dans chaque module Mi_X de stockage d'énergie électrique de manière indépendante. L'unité centrale UC et les unités de gestion d'énergie électrique U_Mi_X de chaque module de stockage d'énergie électrique, sont ainsi aptes à :
- Déterminer une demande d'exécution d'une fonction de gestion d'un module de stockage d'énergie électrique ;
- Déterminer la séquence à appliquer pour mettre en oeuvre ladite fonction de gestion sélectionnée ;
La détermination de la demande en exécution sera avantageusement mise en oeuvre par chaque unité de gestion d'énergie électrique U_Mi_X associée aux modules de stockage d'énergie électrique. Il s'agira par exemple d'effectuer des mesures de tension aux bornes des cellules du module Mi_X de stockage d'énergie électrique. Après avoir acquis les données de tension mesurées, un module logiciel de l'unité de gestion d'énergie électrique U_Mi_X est alors apte à traiter lesdites données et à déterminer si une fonction de gestion doit être menée pour le module de stockage d'énergie électrique associée. Une demande d'exécution peut ensuite être émise vers l'unité centrale UC à travers la deuxième liaison de communication décrite ci-dessus.

La détermination de la séquence à appliquer à un module Mi_X de stockage d'énergie électrique sera avantageusement mise en oeuvre par un module logiciel de traitement de l'unité centrale UC. Avantageusement, la séquence à appliquer comporte alors au moins les deux particularités suivantes :
- Au moins une phase de charge Ph_ch du module Mi_X de stockage d'énergie électrique par une commande en freinage de son ensemble d'entraînement électrique Ei_X ;
- Une phase de maintien d'une vitesse de consigne globale non nulle au système de transport 1, afin de permettre ledit freinage.

De manière générale, il faut comprendre que l'exécution d'une fonction de gestion à un module Mi_X de stockage d'énergie électrique peut s'appliquer à tout module Mi_X d'un ensemble d'entraînement électrique Ei_X du système quel que soit le véhicule Vi auquel il est chacun associé et que le maintien de la vitesse de consigne Vref non nulle s'applique à un ou plusieurs des autres ensembles d'entraînement du système, quels que soient les véhicules du système auxquels ils sont associés. De même, il faut également comprendre que des fonctions de gestion peuvent être exécutés pour tous les modules en même temps, sauf pour au moins un module qui doit être employé pour tracter le système.

L'une des fonctions de gestion mise en oeuvre consiste notamment à équilibrer les cellules d'un module de stockage d'énergie électrique alors que le système de transport 1 est en fonctionnement. Pour cela, l'unité centrale UC doit gérer des demandes d'équilibrage provenant de chaque unité de gestion d'énergie électrique, tout en répondant à la consigne de vitesse globale Vref demandée par le système 1. La mise en oeuvre de l'invention suppose donc que le système de transport 1 comporte au moins deux ensembles d'entraînement distincts, au moins un premier ensemble fonctionnant en mode moteur pour entraîner le système de transport à une vitesse de consigne non nulle en consommant l'énergie électrique disponible dans son module de stockage et au moins un deuxième ensemble d'entraînement commandé en freinage afin de récupérer du courant destiné à l'exécution de la séquence d'équilibrage. Ce principe pourra s'appliquer pour toute fonction de gestion d'un module.

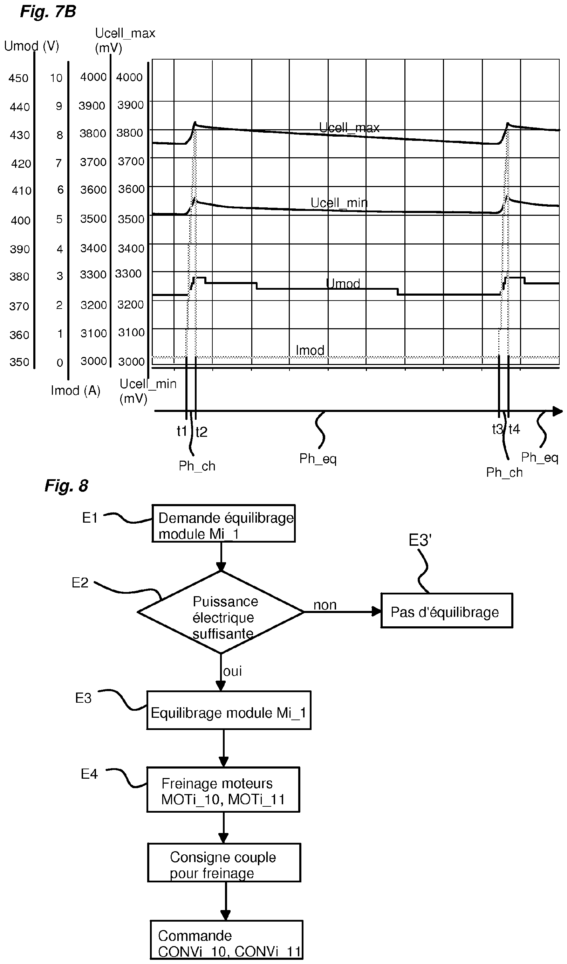

De manière non limitative, pour un module Mi_1, une demande d'équilibrage reçue par l'unité centrale UC est traitée de la manière décrite ci-dessous, en liaison avec la figure 8.

Etape E1 : L'unité centrale UC reçoit par exemple une demande d'équilibrage des cellules du module Mi_1 de stockage d'énergie électrique du premier ensemble d'entraînement Ei_1, en provenance de l'unité de gestion d'énergie électrique associée à ce module de stockage d'énergie électrique.

Etape E2 : L'unité centrale UC vérifie que la demande d'équilibrage peut être traitée. Pour cela, l'unité centrale UC détermine si la puissance électrique nécessaire pour entraîner le système à la vitesse de consigne Vref reste disponible, même en l'absence de celle du module de stockage Mi_1 dont les cellules sont à équilibrer.

Etape E3 : Si la puissance électrique nécessaire reste disponible, l'unité centrale UC répond favorablement à la demande d'équilibrage des cellules du module Mi_1 de stockage d'énergie électrique.

Etape E4 : Une séquence d'équilibrage en tension est réalisée par une alternance de phases de charge des cellules du module et de phases d'équilibrage des tensions des cellules du module. Chaque phase de charge est mise en oeuvre par une commande en freinage à destination des convertisseurs CONVi_10, CONVi_11 du premier ensemble d'entraînement Ei_1. Le freinage est piloté par les convertisseurs. Le freinage est maitrisé en couple (et donc en courant) et en durée/répétition. Il peut donc s'adapter aux commandes de l'unité centrale UC pour effectuer les phases de charge des cellules du module de stockage d'énergie électrique. La vitesse de consigne globale Vref étant par exemple maintenue constante (non nulle) pendant la séquence d'équilibrage, chaque autre moteur électrique du système génère un couple suffisant pour maintenir cette vitesse de consigne globale Vref.

Etape E3' : Si la puissance électrique nécessaire pour entraîner le système 1 à la vitesse de consigne Vref n'est pas disponible pour satisfaire la demande d'équilibrage, l'unité centrale UC met la demande d'équilibrage en attente et recommencera le test ultérieurement.

Le courant électrique généré lors de la décélération des moteurs électriques MOTi_10, MOTi_11 est injecté dans le module Mi_1 de stockage d'énergie électrique et employé pour obtenir une charge des cellules du module avant une phase d'équilibrage en tension des cellules de ce module.

On verra ci-dessous que plusieurs injections de courant de charge, donc plusieurs phases de freinage successives, sont avantageusement réalisées dans une même séquence d'équilibrage en tension des cellules du module.

La séquence d'équilibrage en tension des cellules du module Mi_1 est préférentiellement gérée par l'unité de gestion d'énergie électrique U_Mi_1 du module de stockage d'énergie électrique.

Il faut noter que le courant nécessaire pour recharger les cellules du module lors de l'équilibrage est faible et est négligeable devant le courant nécessaire à la traction du système 1. L'énergie nécessaire pour l'équilibrage est également très faible par rapport à celle nécessaire à la traction, moins de 1%, par exemple de l'ordre de 0.1%. Cependant, il faut comprendre qu'il est tout à fait possible que la puissance prélevée sur une phase de charge soit relativement élevée, autour de 10%.

En outre, il est évident que le module Mi_1 de stockage de l'énergie en cours d'équilibrage ne peut pas servir à la motorisation du véhicule et du système. Bien entendu, la vitesse de consigne Vref appliquée au système de transport pourra varier pendant la séquence d'équilibrage. Ainsi, lorsque son énergie ou sa puissance sera nécessaire au système, la séquence d'équilibrage devra être interrompue.

Les figures 7A et 7B illustrent, par des courbes, le principe d'une séquence d'équilibrage en tension des cellules d'un module Mi_1 de stockage d'énergie électrique. La figure 7A montre une séquence d'équilibrage dans sa totalité alors que la figure 7B est un zoom sur la séquence d'équilibrage afin de mieux cerner son principe. Sur la figure 7A, on peut ainsi voir que :
- La séquence d'équilibrage des tensions aux bornes de chaque cellule du module de stockage Mi_1 est réalisée en alternant plusieurs phases de charge (Ph_ch) en courant successives des cellules d'un module avec des phases d'équilibrage (Pch_eq) en tension des cellules de ce module. Dans chaque phase de charge, le courant de charge Imod est généré par le freinage des moteurs électriques associés au module de stockage dont les cellules sont à équilibrer ;
- A chaque phase de charge (Ph_ch), le courant Imod qui traverse le module augmente et forme un pic de courant. Chaque pic de courant Imod correspond à une phase de charge (Ph_ch) ; La tension Umod correspond à la tension du module de stockage d'énergie électrique ;
- L'état de charge (SOC) du module augmente par paliers successifs jusqu'à atteindre réellement 100% à la fin de la séquence d'équilibrage ;
- La courbe de tension Ucell_max la plus haute d'une cellule du module et la courbe de tension Ucell_min la plus basse d'une autre cellule du module convergent vers une valeur commune d'environ 3.75 V à la fin de la séquence d'équilibrage ;

Sur la figure 7B, on peut voir plus en détails que :
- A l'instant t1 la séquence d'équilibrage en tension des cellules du module Mi_1 débute par une première phase de charge des cellules du module Mi_1 ; L'unité de gestion d'énergie électrique U_Mi_1 du module Mi_1 envoie une demande en freinage à l'unité centrale UC pour obtenir un courant de charge des cellules de son module Mi_1 par freinage régénératif.
- Entre l'instant t1 et l'instant t2, la première phase de charge résulte en une première variation positive du courant de charge Imod. Cette variation de courant entraîne une augmentation de la tension aux bornes de chaque cellule du module (sur la figure sont représentées la courbe de tension Ucell_max la plus haute d'une cellule du module et la courbe de tension Ucell_min la plus basse d'une autre cellule du module). La tension Umod aux bornes du module augmente également ; La durée de la phase de charge Ph_ch est gérée par l'unité de gestion d'énergie électrique U_Mi_1 du module Mi_1 ;
- A l'instant t2 se termine une première phase de charge ;
- Entre l'instant t2 et l'instant t3, le moteur électrique est commandé en roue libre, pour ne fonctionner ni en mode moteur, ni en mode générateur ; L'unité de gestion d'énergie électrique U_Mi_1 met en oeuvre une phase d'équilibrage. Les cellules qui sont trop chargées sont ainsi déchargées par dissipation dans des résistances de décharge ;
- Entre l'instant t3 et l'instant t4, l'unité de gestion U_Mi_1 commande une deuxième phase de charge du module, résultant en une deuxième variation positive du courant de charge Imod du module ; La durée de la deuxième phase de charge est gérée par l'unité de gestion d'énergie électrique U_Mi_1 du module Mi_1 ;
- A l'instant t4 se termine la deuxième phase de charge.
- Entre l'instant t4 et l'instant t5, l'unité de gestion d'énergie électrique U_Mi_1 du module Mi_1 commande une nouvelle phase d'équilibrage de ses cellules.
- L'alternance entre phase de charge et phase d'équilibrage est avantageusement mise en oeuvre plusieurs fois (éventuellement plus de deux fois), jusqu'à équilibrage en tension des cellules du module de stockage d'énergie électrique, c'est-à-dire jusqu'à ce que chaque cellule soit dans un état de charge satisfaisant (voir figure 7A) ;

Sur les figures 7A et 7B, on peut voir que chaque injection d'un courant de charge par freinage est réalisée sur une durée faible par rapport à la durée totale de la séquence d'équilibrage en tension des cellules. Cependant, il faut comprendre que les durées de chaque phase de charge et chaque phase d'équilibrage pourront être dépendantes de plusieurs paramètres, notamment du type de cellules à charger, du dimensionnement des dispositifs de décharge (résistances), du courant de charge, du déséquilibre en tension des cellules...

Comme décrit ci-dessus, entre deux injections par freinage, le moteur est par exemple en roue libre lors de la phase d'équilibrage. La tension de chaque cellule du module diminue par relaxation et éventuellement, en plus, de manière commandée, par décharge passive ou active. Des résistances de décharge font par exemple partie du module de stockage, une résistance de décharge étant associée à chaque cellule ou groupe de cellules du module.

La séquence d'équilibrage est mise en oeuvre par l'unité de gestion électrique du module Mi_1 en exécutant des modules logiciels, plus particulièrement un module logiciel pour commander la charge pour chaque phase de charge Ph_ch et un module logiciel d'équilibrage pour commander l'équilibrage en tension lors de chaque phase d'équilibrage Ph_eq de la séquence. L'unité de gestion électrique U_Mi_1 reçoit notamment à intervalles réguliers les niveaux de tension des différentes cellules du module afin d'adapter la charge en courant par le freinage et la décharge des cellules dans les résistances de décharge jusqu'à équilibrage en tension des cellules du module. Des capteurs de tension sont donc employés pour mesurer la tension aux bornes de chaque cellule du module.

Avantageusement, l'unité de gestion électrique U_Mi_1 du module détermine l'instant auquel il considère que toutes les cellules de son module sont équilibrées en tension. La séquence d'équilibrage peut ainsi avoir une durée variable.

De manière non limitative, des interrupteurs (par exemple des transistors MOSFET) commandés par l'unité de gestion électrique du module sont avantageusement employés pour commander les décharges ciblées des différentes cellules dans les résistances de décharge.

De la description ci-dessus, on comprend qu'il est intéressant de proposer une solution de gestion d'énergie électrique dans un système de transport. La solution proposée permet de mettre en oeuvre une séquence d'équilibrage des cellules d'un module, alors que le système de transport est en fonctionnement. La solution de l'invention est donc particulièrement avantageuse car elle permet d'éviter d'immobiliser le système de transport trop longtemps.

## Revendications

1. Système de transport (1) à énergie électrique comportant un nombre n de véhicules Vi, avec i allant de 1 à n et n supérieur ou égal à 1, les véhicules étants accrochés entre eux par une liaison mécanique; chaque véhicule comportant:
- Plusieurs ensembles de roulement (Ri_X);
- Plusieurs ensembles d'entraînement électrique (Ei_X), associés chacun à un ensemble de roulement distinct, chaque ensemble d'entraînement électrique comprenant :
o Au moins un moteur électrique (MOTi_Y) pour entraîner ledit ensemble de roulement au sol en rotation ;
o Au moins un module (Mi_X) de stockage d'énergie électrique destiné à alimenter ledit moteur électrique en énergie électrique et comportant plusieurs cellules de stockage d'énergie électrique ;
o Au moins un convertisseur de tension (CONVi_Y) bidirectionnel agencé pour contrôler un transfert d'énergie électrique entre ledit module de stockage d'énergie électrique et ledit moteur électrique dans un mode moteur ou un transfert d'énergie du moteur électrique vers le module de stockage d'énergie électrique dans un mode générateur ;
- Le module de stockage d'énergie électrique de chaque ensemble d'entraînement électrique ne présentant aucune liaison électrique de puissance avec le module de stockage d'énergie électrique de chaque autre ensemble d'entraînement électrique ;
- Des moyens de traitement et de gestion agencés pour gérer chaque module de stockage d'énergie électrique et pour commander chaque convertisseur desdits ensembles d'entraînement électrique ; les moyens de traitement et de gestion comportant :
o Des moyens de détermination d'une demande en exécution d'au moins une fonction de gestion au sein de chaque module de stockage d'énergie électrique ;
o Des moyens de détermination d'une séquence à appliquer au module de stockage d'énergie électrique selon ladite fonction de gestion déterminée pour ce module, et en ce que
o Pour un premier module (Mi_1) d'un premier ensemble d'entraînement électrique (Ei_1) du système, ladite séquence comporte au moins une phase de charge par injection d'un courant de charge dans les cellules de ce premier module de stockage d'énergie électrique, généré par un freinage du premier ensemble d'entraînement électrique (Ei_1) et au moins une phase de maintien d'une vitesse de consigne non nulle du système de transport pendant ledit freinage, appliquée au moins en partie à un deuxième ensemble d'entraînement électrique (Ei_2) du système,
- Ledit système étant **caractérisé en ce que** ladite séquence pour le premier module de stockage d'énergie électrique (Mi_1) du premier ensemble d'entraînement électrique (Ei_1) consiste en une séquence d'équilibrage en tension des cellules du module de stockage d'énergie électrique.

2. Système selon la revendication 1, **caractérisé en ce que** les moyens de traitement et de gestion comportent une unité centrale (UC) et plusieurs unités de gestion d'énergie électrique (U_Mi_X) associés chacune à un module de stockage d'énergie électrique distinct desdits au moins deux ensembles d'entraînement électrique.

3. Système selon la revendication 2, **caractérisé en ce qu'**il comporte au moins deux liaisons de communication reliant l'unité centrale à chaque ensemble d'entraînement.

4. Système selon la revendication 1, **caractérisé en ce que** la séquence d'équilibrage comporte plusieurs phases de charge (Ph_ch) successives, entraînant plusieurs injections de courant de charge successives dans le module de stockage d'énergie électrique dont les cellules sont à équilibrer, séparées entre elles par des phases d'équilibrage (Ph_eq).

5. Système selon l'une des revendications 1 à 4, **caractérisé en ce que** chaque ensemble d'entraînement (Ei_X) comporte :
- Deux moteurs électriques (MOTi_Y) ;
Deux convertisseurs (CONVi_Y) destinés chacun à commander un moteur électrique distinct ;
- Un module (Mi_X) de stockage d'énergie électrique.

6. Système selon la revendication 5, **caractérisé en ce que** chaque ensemble de roulement (Ri_X) comporte deux roues (Ri_Z), actionnées chacune par un moteur distinct (MOTi_Y) de l'ensemble d'entraînement (Ei_X).

7. Système selon la revendication 5 ou 6, **caractérisé en ce que** chaque ensemble d'entraînement comporte un chargeur intégré au module de stockage d'énergie électrique.

8. Système selon l'une des revendications 1 à 7, **caractérisé en ce que** le module (Mi_X) de stockage d'énergie électrique de chaque ensemble d'entraînement comporte une sortie auxiliaire agencée pour alimenter au moins un auxiliaire de puissance.

9. Système selon la revendication 8, **caractérisé en ce que** la sortie auxiliaire est protégée par deux diodes.

10. Système selon l'une des revendications 1 à 9, **caractérisé en ce que** chaque ensemble d'entraînement (Ei_X) comporte une unité de gestion de l'énergie électrique (U_Mi_X) stockée dans le module (Mi_X) de stockage d'énergie électrique.

11. Procédé de gestion d'énergie électrique dans un système de transport conforme à celui défini dans les revendications 1 à 10, **caractérisé en ce qu'**il comporte les étapes suivantes :
- Déterminer une demande en exécution d'au moins une fonction de gestion au sein du premier module de stockage d'énergie électrique du premier ensemble d'énergie électrique ;
- Déterminer une séquence à appliquer au premier module de stockage d'énergie électrique du premier ensemble d'entraînement électrique selon ladite fonction de gestion déterminée, ladite séquence comprenant au moins une phase de charge (Ph_ch) par injection d'un courant de charge dans les cellules du premier module de stockage d'énergie électrique du premier ensemble d'entraînement électrique, généré par un freinage du premier ensemble d'entraînement électrique et au moins une phase de maintien d'une vitesse de consigne non nulle du système de transport pendant ledit freinage appliquée au moins en partie audit deuxième ensemble d'entraînement électrique, ladite séquence consistant en une séquence d'équilibrage en tension des cellules du premier module de stockage d'énergie électrique du premier ensemble d'entraînement électrique.

12. Procédé selon la revendication 11, **caractérisé en ce que** la séquence d'équilibrage comporte plusieurs phases de charge (Ph_ch) successives, entraînant plusieurs injections de courant de charge successives dans le premier module de stockage d'énergie électrique dont les cellules sont à équilibrer, séparées entre elles par des phases d'équilibrage (Ph_eq).

## Patentansprüche

1. Elektrisch angetriebenes Transportsystem (1), das eine Anzahl n von Fahrzeugen Vi aufweist, mit i von 1 bis n und n höher als oder gleich 1, wobei die Fahrzeuge durch eine mechanische Verbindung aneinander befestigt sind, wobei jedes Fahrzeug aufweist:
- mehrere Rolleinheiten (Ri_X),
- mehrere elektrische Antriebseinheiten (Ei_X), die je einer unterschiedlichen Rolleinheit zugeordnet sind, wobei jede elektrische Antriebseinheit enthält:
o mindestens einen Elektromotor (MOTi_Y), um jede Rolleinheit am Boden in Drehung zu versetzen;
o mindestens ein Speichermodul elektrischer Energie (Mi_X), das dazu bestimmt ist, den Elektromotor mit elektrischer Energie zu versorgen und mehrere Speicherzellen elektrischer Energie aufweist;
o mindestens einen bidirektionalen Spannungswandler (CONVi_Y), der eingerichtet ist, um eine Übertragung elektrischer Energie zwischen dem Speichermodul elektrischer Energie und dem Elektromotor in einem Antriebsmodus oder eine Energieübertragung vom Elektromotor zum Speichermodul elektrischer Energie in einem Generatormodus zu kontrollieren;
- wobei das Speichermodul elektrischer Energie jeder elektrischen Antriebseinheit keine elektrische Leistungsverbindung mit dem Speichermodul elektrischer Energie jeder anderen elektrischen Antriebseinheit aufweist;
- Verarbeitungs- und Verwaltungseinrichtungen, die eingerichtet sind, um jedes Speichermodul elektrischer Energie zu verwalten, und um jeden Wandler der elektrischen Antriebseinheiten zu steuern;
wobei die Verarbeitungs- und Verwaltungseinrichtungen aufweisen:
o Einrichtungen zur Bestimmung einer Ausführungsanforderung mindestens einer Verwaltungsfunktion innerhalb jedes Speichermoduls elektrischer Energie;
o Einrichtungen zur Bestimmung einer an das Speichermodul elektrischer Energie gemäß der für dieses Modul bestimmten Verwaltungsfunktion anzuwendenden Folge, und dass
o für ein erstes Modul (Mi_1) einer ersten elektrischen Antriebseinheit (Ei_1) des Systems die Folge mindestens eine Ladephase durch Einspeisen eines Ladestroms in die Zellen dieses ersten Speichermoduls elektrischer Energie, erzeugt durch einen Bremsvorgang der ersten elektrischen Antriebseinheit (Ei_1), und mindestens eine Beibehaltungsphase einer Sollgeschwindigkeit ungleich Null des Transportsystems während des Bremsvorgangs aufweist, angewendet zumindest zum Teil an eine zweite elektrische Antriebseinheit (Ei_2) des Systems,
wobei das System **dadurch gekennzeichnet ist, dass** die Folge für das erste Speichermodul elektrischer Energie (Mi_1) der ersten elektrischen Antriebseinheit (Ei_1) aus einer Spannungsausgleichfolge der Zellen des Speichermoduls elektrischer Energie besteht.

2. System nach Anspruch 1, **dadurch gekennzeichnet, dass** die Verarbeitungs- und Verwaltungseinrichtungen eine Zentraleinheit (UC) und mehrere Verwaltungseinheiten elektrischer Energie (U_Mi_X) aufweisen, die je einem unterschiedlichen Speichermodul elektrischer Energie der mindestens zwei elektrischen Antriebseinheiten zugeordnet sind.

3. System nach Anspruch 2, **dadurch gekennzeichnet, dass** es mindestens zwei Kommunikationsverbindungen aufweist, die die Zentraleinheit mit jeder Antriebseinheit verbinden.

4. System nach Anspruch 1, **dadurch gekennzeichnet, dass** die Ausgleichfolge mehrere aufeinanderfolgende Ladephasen (Ph_ch) aufweist, die mehrere aufeinanderfolgende Ladestromeinspeisungen in das Speichermodul elektrischer Energie verursachen, dessen Zellen auszugleichen sind, voneinander getrennt durch Ausgleichphasen (Ph_eq).

5. System nach einem der Ansprüche 1 bis 4, **dadurch gekennzeichnet, dass** jede Antriebseinheit (Ei_X) aufweist:
- zwei Elektromotoren (MOTi_Y);
- zwei Wandler (CONVi_Y), die je dazu bestimmt sind, einen unterschiedlichen Elektromotor zu steuern;
- ein Speichermodul elektrischer Energie (Mi_X).

6. System nach Anspruch 5, **dadurch gekennzeichnet, dass** jede Rolleinheit (Ri_X) zwei Räder (Ri_Z) aufweist, die je von einem unterschiedlichen Motor (MOTi_Y) der Antriebseinheit (Ei_X) betätigt werden.

7. ystem nach Anspruch 5 oder 6, **dadurch gekennzeichnet, dass** jede Antriebseinheit ein in das Speichermodul elektrischer Energie integriertes Ladegerät aufweist.

8. System nach einem der Ansprüche 1 bis 7, **dadurch gekennzeichnet, dass** das Speichermodul elektrischer Energie (Mi_X) jeder Antriebseinheit einen Hilfsausgang aufweist, der eingerichtet ist, mindestens ein Leistungshilfsmittel zu speisen.

9. System nach Anspruch 8, **dadurch gekennzeichnet, dass** der Hilfsausgang von zwei Dioden geschützt wird.

10. System nach einem der Ansprüche 1 bis 9, **dadurch gekennzeichnet, dass** jede Antriebseinheit (Ei_X) eine Verwaltungseinheit der elektrischen Energie (U_Mi_X) aufweist, die im Speichermodul elektrischer Energie (Mi_X) gespeichert ist.

11. Verfahren zur Verwaltung elektrischer Energie in einem gemäß den Ansprüchen 1 bis 10 definierten Transportsystem, **dadurch gekennzeichnet, dass** es die folgenden Schritte aufweist:
- Bestimmen einer Ausführungsanforderung mindestens einer Verwaltungsfunktion innerhalb des ersten Speichermoduls elektrischer Energie der ersten elektrischen Energieeinheit;
- Bestimmen einer an das erste Speichermodul elektrischer Energie der ersten elektrischen Antriebseinheit gemäß der bestimmten Verwaltungsfunktion anzuwendenden Folge, wobei die Folge mindestens eine Ladephase (Ph_ch) durch Einspeisen eines Ladestroms in die Zellen des ersten Speichermoduls elektrischer Energie der ersten elektrischen Antriebseinheit, erzeugt durch einen Bremsvorgang der ersten elektrischen Antriebseinheit, und mindestens eine Beibehaltungsphase einer Sollgeschwindigkeit ungleich Null des Transportsystems während des Bremsvorgangs aufweist, die mindestens zum Teil an die zweite elektrische Antriebseinheit angewendet wird, wobei die Folge aus einer Spannungsausgleichfolge der Zellen des ersten Speichermoduls elektrischer Energie der ersten elektrischen Antriebseinheit besteht.

12. Verfahren nach Anspruch 11, **dadurch gekennzeichnet, dass** die Ausgleichfolge mehrere aufeinanderfolgende Ladephasen (Ph_ch) aufweist, die mehrere aufeinanderfolgende Ladestromeinspeisungen in das erste Speichermodul elektrischer Energie verursachen, dessen Zellen auszugleichen sind, voneinander getrennt durch Ausgleichphasen (Ph_eq).

## Claims

1. Electrically powered transport system (1) including a number n of vehicles Vi, where i ranges from 1 to n and n is greater than or equal to 1, the vehicles being coupled to one another by means of a mechanical connection; each vehicle including:
- a plurality of rolling assemblies (Ri_X);
- a plurality of electric drive assemblies (Ei_X), each of which is associated with a distinct rolling assembly, each electric drive assembly comprising:
o at least one electric motor (MOTi_Y) for driving said rolling assembly on the ground in rotation;
o at least one electrical energy storage module (Mi_X) that is intended to supply said electric motor with electrical energy and that includes a plurality of electrical energy storage cells;
o at least one bidirectional voltage converter (CONVi_Y) that is arranged to control a transfer of electrical energy between said electrical energy storage module and said electric motor in a motor mode or a transfer of energy from the electric motor to the electrical energy storage module in a generator mode;
- the electrical energy storage module of each electric drive assembly having no electrical power connection with the electrical energy storage module of each other electric drive assembly;
- processing and management means that are arranged to manage each electrical energy storage module and to control each converter of said electric drive assemblies,
the processing and management means including:
o means for determining a request to run at least one management function within each electrical energy storage module;
o means for determining a sequence to be applied to the electrical energy storage module according to said management function determined for this module; and in that
o for a first module (Mi_1) of a first electric drive assembly (Ei_1) of the system, said sequence includes at least one phase of charging by injecting a charging current into the cells of this first electrical energy storage module, which is generated by braking of the first electric drive assembly (Ei_1), and at least one phase of maintaining a nonzero setpoint speed for the transport system during said braking, which is applied at least partly to a second electric drive assembly (Ei_2) of the system,
- said system being **characterized in that** said sequence for the first electrical energy storage module (Mi_1) of the first electric drive assembly (Ei_1) consists of a sequence for voltage-balancing the cells of the electrical energy storage module.

2. System according to Claim 1, **characterized in that** the processing and management means include a central unit (UC) and a plurality of electrical energy management units (U_Mi_X), each of which is associated with a distinct electrical energy storage module of said at least two electric drive assemblies.

3. System according to Claim 2, **characterized in that** it includes at least two communication links linking the central unit to each drive assembly.

4. System according to Claim 1, **characterized in that** the balancing sequence includes a plurality of successive charging phases (Ph_ch), involving a plurality of successive injections of charging current into the electrical energy storage module the cells of which are to be balanced, separated from one another by balancing phases (Ph_eq).

5. System according to one of Claims 1 to 4, **characterized in that** each drive assembly (Ei_X) includes:
- two electric motors (MOTi_Y);
two converters (CONVi_Y), each of which is intended to control a distinct electric motor;
- an electrical energy storage module (Mi_X).

6. System according to Claim 5, **characterized in that** each rolling assembly (Ri_X) includes two wheels (Ri_Z), each of which is actuated by a distinct motor (MOTi_Y) of the drive assembly (Ei_X) .

7. System according to Claim 5 or 6, **characterized in that** each drive assembly includes a charger that is incorporated within the electrical energy storage module.

8. System according to one of Claims 1 to 7, **characterized in that** the electrical energy storage module (Mi_X) of each drive assembly includes an auxiliary output that is arranged to supply at least one power auxiliary with power.

9. System according to Claim 8, **characterized in that** the auxiliary output is protected by two diodes.

10. System according to one of Claims 1 to 9, **characterized in that** each drive assembly (Ei_X) includes a unit (U_Mi_X) for managing the electrical energy stored in the electrical energy storage module (Mi_X).

11. Method for managing electrical energy in a transport system in accordance with that defined in Claims 1 to 10, **characterized in that** it includes the following steps:
- determining a request to run at least one management function within the first electrical energy storage module of the first electrical energy assembly;
- determining a sequence to be applied to the first electrical energy storage module of the first electric drive assembly according to said determined management function, said sequence comprising at least one phase (Ph_ch) of charging by injecting a charging current into the cells of the first electrical energy storage module of the first electric drive assembly, which is generated by braking of the first electric drive assembly, and at least one phase of maintaining a nonzero setpoint speed for the transport system during said braking, which is applied at least partly to said second electric drive assembly, said sequence consisting of a sequence for voltage-balancing the cells of the first electrical energy storage module of the first electric drive assembly.

12. Method according to Claim 11, **characterized in that** the balancing sequence includes a plurality of successive charging phases (Ph_ch), involving a plurality of successive injections of charging current into the first electrical energy storage module, the cells of which are to be balanced, separated from one another by balancing phases (Ph_eq).
